# EUROPEAN PATENT SPECIFICATION

(11) **EP 3 107 240 B1**
(45) Date of publication and mention of the grant of the patent: **07.02.2018**
(21) Application number: 15305920.9
(22) Date of filing: 15.06.2015
(51) Int. Cl.: H04L 12/14

(54) **DYNAMIC THIRD PARTY CHARGING**
DYNAMISCHE ABRECHNUNG ÜBER EINEN DRITTANBIETER
FACTURATION DYNAMIQUE D'UN TIERS

(43) Date of publication of application: 21.12.2016
(73) Proprietor: ALCATEL LUCENT, 92100 Boulogne-Billancourt (FR)
(72) Inventor: KASHYAP, Gaurav, 122016 GURGAON (IN); BAWEJA, Varun, 122016 GURGAON (IN); ANSARI, Asif, 124507 Bahadurgarh Haryana (IN)
(74) Representative: Mouney, Jérôme

(56) References cited:
- WO-A1-2013/142331
- WO-A1-2014/135428
- US-A1- 2006 210 041
- US-A1- 2008 103 992
- US-A1- 2014 372 286

## Description

### FIELD OF THE INVENTION

The present invention pertains to the management of a third party charging applying to a service associated with a communication established by a user terminal.

### BACKGROUND

For an ongoing session (data/voice in a telecommunication network), in case a user is running out of the balances (money or bytes or time), currently the call is released or the user is redirected to a categorized link to recharge the balance on-the-fly and continue the session. But in case the user does not have money to pay for the recharge or does not want to charge at the moment from his/her wallet, there is no option provided by the operator and so session is terminated.

Some third party charging solutions permit the user to pre-configure a number/ a person to charge when a communication is initiated.

The 3^{rd} Generation Partnership Protocol (3GPP) Stage 1 defines general requirements for charging in its technical services, TS 22.215 and TS 22.101. Specifically, TS 22.215 defines general requirements for applying charges flexibly to either the calling party or the called party, charging a third party for the session, allowing the splitting of charges among the calling party, the called party, and the third party, and charging according to the type of services and media used.

The document 3GPP TS 32.299 defines a Ro interface for real-time charging between a Charging Trigger Function (CTF) module and an Online Charging System (OCS) module.

Trigger and re-authorization functions define events that the CTF module must monitor while delivering a service. Whenever such an event takes place-for example, a change of location or a change in quality of service-the CTF module must trigger a reauthorization for the OCS module in order to adapt the service's charging.

The OCS module monitors the delivery of a service by means of a Diameter session, during which charging is performed by reserving units. If, during the delivery of a service, a change takes place that may influence rates, the CTF module must produce a message to reserve new units with updated conditions.

Currently, there is a need to provide a mechanism offering a dynamic third party charging allowing the user to select easily a third party to charge and a type of unit to deduct.

### SUMMARY

This summary is provided to introduce concepts related to the present inventive subject matter. This summary is not intended to identify essential features of the claimed subject matter nor is it intended for use in determining or limiting the scope of the claimed. The scope of the invention is defined by the appended claims. In accordance with one embodiment, a method is provided for dynamic third party charging applying to a service associated with a communication established by a communication device of a user within a telecommunications network, the service being suspended due to insufficient balance in the account of the user, comprising the following steps in network element capable of generating charging events while monitoring the communication's use of the network's resources:
retrieving an URL hosted by an application server, and sending the URL to the communication device that displays a web page corresponding to the URL and inviting user to select a call number, an amount of units, and a type of units,
sending a request to the application server, the request containing the selected call number, the selected amount of units, and the selected type of units in order to rent said amount of units from an account associated with said call number,
receiving a response from the application server, if the rent is granted, the response containing the selected call number, the selected amount of units, the selected type of units, and an acknowledgment to proceed with the rent,
requesting a server for the debit of the account associated with said selected call number by the selected amount of units,
requesting the server for the credit of the account of the user by the selected amount of units.

Advantageously, the invention offers an additional feature to the telecommunication network, allowing the user to select a third party to charge and a type of unit to deduct according to the needs of the user. The invention may involve multiple parties that are ready to rent units to the user and can be applied to events that needs quantities, like bytes for Data Session, seconds for voice, etc.

In an embodiment, the step of requesting debit further comprises the following steps:
sending an event request to the server, the event request containing the selected call number, the selected amount of units, and the selected type of units in order to request debit of the selected amount of units from the account associated with said selected call number,
receiving an event response from the server, the event response containing the selected call number, the selected amount of units, and the selected type of units and an indication that the requested debit has been executed.

In an embodiment, the step of requesting (S11, S12) credit further comprises the following steps:
sending an update request to the server, the update request containing the selected call number, the selected amount of units, and the selected type of units and an indication that a balance refill is to be done for the account of the user for the lent from the account associated with said selected call number,
receiving an update response from the server, the update response containing an information about success of crediting by the selected amount of units the account of the user.

In an embodiment, when balance in the account of the user is filled, said selected amount of units is deducted from the account of the user to credit back the account associated with said selected call number.

The invention relates also to a network element for dynamic third party charging applying to a service associated with a communication established by a communication device of a user within a telecommunications network, the service being suspended due to insufficient balance in the account of the user, the network element being capable of generating charging events while monitoring the communication's use of the network's resources and comprising:
means for retrieving an URL hosted by an application server, and sending the URL to the communication device that displays a web page corresponding to the URL and inviting user to select a call number, an amount of units, and a type of units,
means for sending a request to the application server, the request containing the selected call number, the selected amount of units, and the selected type of units in order to rent said amount of units from an account associated with said call number,
means for receiving a response from the application server, if the rent is granted, the response containing the selected call number, the selected amount of units, the selected type of units, and an acknowledgment to proceed with the rent,
means for requesting a server for the debit of the account associated with said selected call number by the selected amount of units,
means for requesting the server for the credit of the account of the user by the selected amount of units.

The invention also pertains to a method for dynamic third party charging applying to a service associated with a communication established by a communication device of a user within a telecommunications network, the service being suspended due to insufficient balance in the account of the user, comprising the following steps in an application server:
receiving a request from a network element capable of generating charging events while monitoring the communication's use of the network's resources, the request containing a call number, an amount of units, and a type of units in order to rent said amount of units from an account associated with said call number,
sending a message to another communication device identified by the selected call number in order to confirm the grant of the rent,
sending a response to the network element, if the rent is granted, the response containing the selected call number, the selected amount of units, the selected type of units, and an acknowledgment to proceed with the rent.

In an embodiment, the message is a USSD message.

The invention also pertains to an application server for dynamic third party charging applying to a service associated with a communication established by a communication device of a user within a telecommunications network, the service being suspended due to insufficient balance in the account of the user, the application server comprising:
means for receiving a request from a network element capable of generating charging events while monitoring the communication's use of the network's resources, the request containing a call number, an amount of units, and a type of units in order to rent said amount of units from an account associated with said call number,
means for sending a message to another communication device identified by the selected call number in order to confirm the grant of the rent,
means for sending a response to the network element, if the rent is granted, the response containing the selected call number, the selected amount of units, the selected type of units, and an acknowledgment to proceed with the rent.

The invention also pertains to a method for dynamic third party charging applying to a service associated with a communication established by a communication device of a user within a telecommunications network, the service being suspended due to insufficient balance in the account of the user, comprising the following steps in a server:
receiving an event request from a network element capable of generating charging events while monitoring the communication's use of the network's resources, the event request containing a call number, an amount of units, and a type of units in order to request debit of the selected amount of units from the account associated with said selected call number,
executing a debit of said amount of units for the account of the selected call number,
receiving an update request from the network element, the update request containing said call number, said amount of units, and said type of units and an indication that a balance refill is to be done for the account of the user for the lent from the account associated with said selected call number,
executing a credit of said amount of units for the account of said user,
when balance in the account of the user is filled, deducting said selected amount of units from the account of the user to credit back the account associated with said selected call number.

The invention also pertains to a server for dynamic third party charging applying to a service associated with a communication established by a communication device of a user within a telecommunications network, the service being suspended due to insufficient balance in the account of the user, the server comprising:
means for receiving an event request from a network element capable of generating charging events while monitoring the communication's use of the network's resources, the event request containing a call number, an amount of units, and a type of units in order to request debit of the selected amount of units from the account associated with said selected call number,
means for executing a debit of said amount of units for the account of the selected call number,
means for receiving an update request from the network element, the update request containing said call number, said amount of units, and said type of units and an indication that a balance refill is to be done for the account of the user for the lent from the account associated with said selected call number
means for executing a credit of said amount of units for the account of said user,
means for deducting said selected amount of units from the account of the user to credit back the account associated with said selected call number, when balance in the account of the user is filled. Preferred embodiments are covered by the dependent claims. The present invention and the benefits thereof shall be better understood upon examining the description below, which makes reference to the attached figures, in which:
   - FIG. 1 is a schematic block diagram of a communication system according to one embodiment of the invention for dynamic third party charging; and
   - FIG. 2 is an algorithm of a method for dynamic third party charging according to one embodiment of the invention.

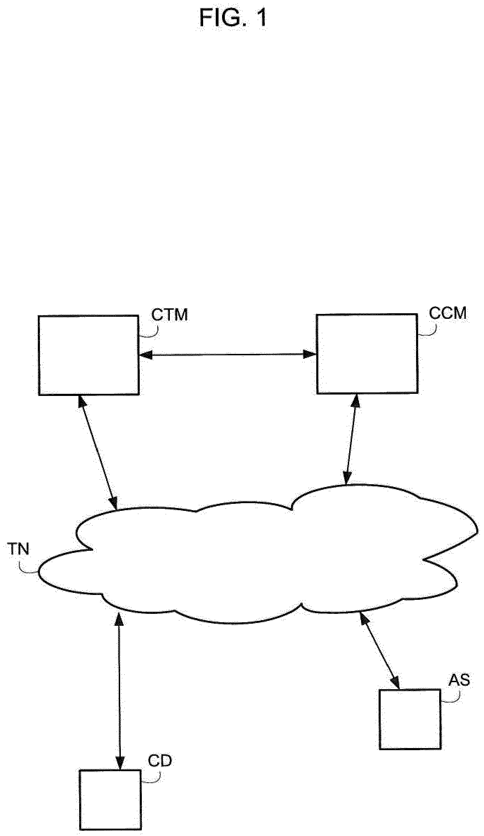

With reference to FIG. 1, a communication system according to the invention comprises a telecommunications network TN, a communication device CD, an application server AS, a charging trigger module CTM and a charging control module CCM.

In the remainder of the description, the term module may designate a device, a software program, or a combination of computer hardware and software, configured to execute at least one particular task.

The telecommunication network TN may be a wired or wireless network, or a combination of wired and wireless networks.

The communication device CD is capable of establishing a communication within a telecommunications network TN, for example with another user terminal. A communication device CD may, for instance, be a landline or mobile telephone, an electronic telecommunication device or object that is personal to the user and which may be a smartphone, a tablet or a computer, capable of being connected to an access terminal of a public wireless local area network (WLAN), or a wireless local area network that complies with one of the 802.1x standards, or a medium-range network using the Worldwide Interoperability for Microwave Access (WiMAX) protocol.

The charging trigger module CTM and the charging control module CCM communicate with one other over the telecommunications network TN, of the Internet type. In one variant, the charging trigger module CTM and the charging control module CCM communicate with one other over a local area network or over specialized lines through the network TN.

The charging trigger module CTM and the charging control module CCM may respectively be implemented in different servers, such as application servers.

A particular functionality of the charging trigger module CTM is to ensure that the service is delivered with the assistance of service units authorized by the charging control module CCM, which it regularly triggers in order to do so.

A particular functionality of the charging control module CCM is to determine an authorized number of service units for delivering the service, and to transmit a reply containing that authorized number of service units to the charging trigger module CTM. To that end, the module CCM may determine a rate associated with the account or sub-account to be used to charge the service, and may determine the authorized number of service units based on the rate and on the number of service units remaining in the account or sub-account.

Another particular functionality of the charging control module CCM is to determine when user balances allows units for reservation and triggers a third party charging if no more units are available. The charging control module CCM sends a message to the charging trigger module CTM to redirect the user toward an interface through which the user can select third party to charge and a type of unit to deduct.

Furthermore, whenever the charging control module CCM receives a number of units that are actually being used for the service, transmitted by the charging trigger module CTM, the module CCM decrements the corresponding account or sub-account.

According to one embodiment of the invention that will be referred to throughout the remainder of the description, the telecommunication network TN is a packet network connected to an IP Multimedia Subsystem (IMS) network.

It is assumed that the communication device is capable of communicating through the telecommunications network TN connected to the IMS network, for example with another terminal, using communication compliant with the Session Initiation Protocol (SIP). For example, the communication corresponds to an exchange of multimedia flows regarding audio and/or video content, or instant messages. The communication established by the user terminal may also be a communication with a service server, such as a web server or multimedia content server.

The user's profile, containing the services to which that user has subscribed, is saved in a Home Subscriber Server (HSS) server that manages a database particularly containing users' identities, registration information, access parameters, and information needed to invoke the services that the users have subscribed to. In one implementation, the HSS server interacts with other entities of the IMS network using the Diameter protocol.

The control of a communication initiated by the terminal is performed within the IMS network, particularly by three Call State Control Function (CSCF) control entities: the entities Proxy CSCF (P-CSCF), Interrogating CSCF (I-CSCF), and Serving-CSCF (S-CSCF).

The entity P-CSCF is the first point of contact in the IMS network, and its address is discovered by the user terminal when a Packet Data Protocol (PDP) context is activated to exchange SIP messages.

The entity I-CSCF communicates with the entity P-CSCF and with the HSS server to assign the entity S-CSCF to the user based on the user's profile saved in the HSS server.

The entity S-CSCF is in charge of controlling the communication session established by the user terminal and invoking the services to which the user has subscribed.

The charging trigger module CTM queries the charging control module CCM for units to be consumed during the delivery of a service. The charging trigger module CTM and the charging control module CCM communicate with one another, for example, by means of the Diameter Ro protocol.

The charging control module CCM may be included in an online charging system (OCS), which may be a server located elsewhere in the IMS network.

The charging trigger module CTM may be included in a network element, such as an application server or Gateway GPRS Support Node (GGSN) gateway. For example, the charging trigger module CTM implements a Charging Trigger Function (CTF), which is a central point for collecting relevant information about charging events in the network and monitoring the communication's use of network resources.

The network element, in which is included the charging trigger module CTM, is capable of generating charging events while monitoring the communication's use of network resources.

The charging control module CCM determines the present price of a current communication based on a set of parameters and the values of those parameters associated with the price. The parameters are related to the communication, and may partly correspond to context data provided by the network or be based on context data sets.

According to one embodiment, the charging control module CCM is configured to trigger the application server AS and to redirect the communication device to a web site with which the user can select third party to charge, a type of units and an amount of units to deduct. When the user has made the selection, the charging trigger module CTM sends a request to the charging control module CCM to debit the amount of selected units from the selected third party.

Then, the charging trigger module CTM sends a request towards the charging control module CCM, the request containing a credit update of the amount of selected units for the user and an AVP (Attribute Value Pair) LEND which has the information about the units being provided to the user and from the selected third party.

The AVP is of type Grouped and provides detail about the units and user information who provided the units. For example, the AVP contains the following information:

```
        LEND ::=<AVP Header:XXX>
                 *{Subscription-Id}
                 *{CC-Unit-Type }
                 *{Unit-Value}
```

The application server AS implements a Home Subscriber Server (HSS) that manages a database particularly containing users' identities, registration information, access parameters, and information needed to invoke the services that the users have subscribed to.

The application server AS receives an user information request from the charging trigger module CTM, the user information request containing the call number of the user, the call number of the third party to charge, a type of units and an amount of units to deduct.

The application server AS checks the information entered by the user and enquires them for the grant of the selected units to the user. The enquiry can be done via an USSD (Unstructured Supplementary Service Data) message sent to the call number NUMBER2 of the third party in the following way: "Do you approve access of x units from your account to NUMBER1", where NUMBER1 is the call number of the communication device of the user. If there is a success in the grant from call number NUMBER2, the same call number NUMBER2 is send across to the charging trigger module CTM as answer to the user information request.

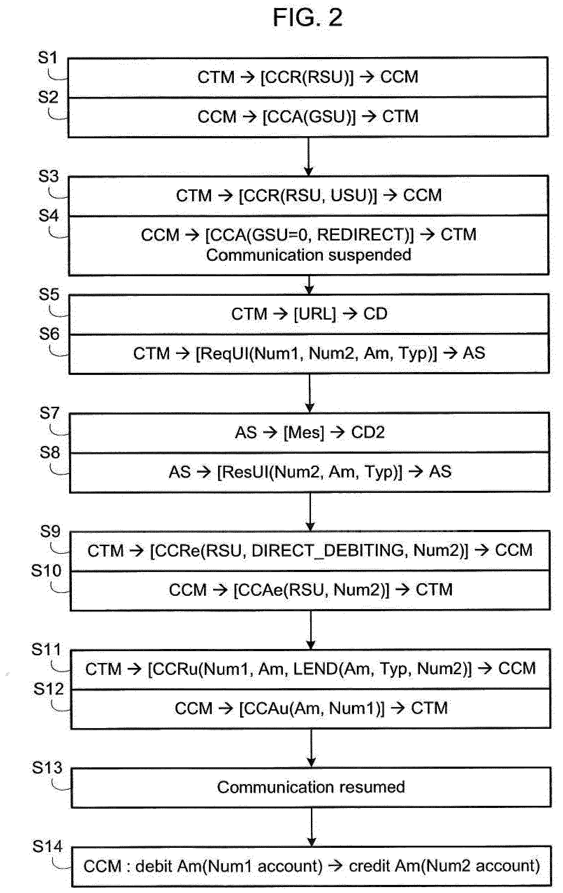

With reference to FIG. 2, a method for dynamic third party charging according to one embodiment of the invention comprises steps S1 to S14 executed within the communication system.

The method is described below with reference to a telecommunication network TN connected to an IMS network as an example.

In step S1, the communication device CD establishes a communication within the network TN, for example with another communication device or a server.

The communication device transmits a communication session initiation message to the charging trigger module CTM. This message is, for example, an "INVITE" message, and particularly contains an identifier of the type of communication requested by the user, which corresponds, for example, to a session or a video session. The charging trigger module CTM identifies the user's profile and the type of service related to the communication. The module CTM transmits a Credit Control Request (CCR) to the charging control module CCM to request authorization to use the service related to the communication established by the communication device CD.

The request CCR particularly contains an identifier of the service, a number of requested service units (RSUs), and the call number of the user.

In step S2, the charging control module CCM determines the communication's initial price, based on a set of parameter values related to the communication and the type of service by means of the identifier of the service. The charging control module CCM verifies that the service can be delivered based on the user's account, meaning if the account contains enough units to authorize the delivery of the service.

The charging control module CCM transmits a reply CCA to the charging trigger module CTM, the reply containing the identifier of the service and the number of granted service units (GSUs) that corresponds to a maximum number of units that are debited over the course of the communication. Once all the units have been debited, the charging trigger module CTM must automatically query the charging control module CCM again in order to request a number of RSUs.

In step S3, once granted service units have been consumed, the charging trigger module CTM transmits again a Credit Control Request (CCR) to the charging control module CCM to reserve more service units, the request CCR particularly containing a new number of requested service units (RSUs) and the number of used units consumed that can be called also Used Service Unit (USU).

In step S4, the charging control module CCM checks for availability of resources for reservation. As no more service units are available for reservation, the charging control module CCM transmits a reply CCA to the charging trigger module CTM, the reply containing the identifier IdS of the service, the number of granted service units (GSUs) equal to zero, a Result-Code 4012 and a Final-Unit-Action as REDIRECT with Redirection Validity-Time and an optionally URL hosted by the application server AS. The communication is thus suspended.

In step S5, the charging trigger module CTM checks for user configuration for advanced redirection in a user profile. The user profile can be stored in the charging trigger module CTM or in the charging control module CCM. The charging trigger module CTM sends the URL hosted by the application server AS to the communication device CD, said URL being retrieved in the reply CCA, or in the user profile stored either in the charging trigger module CTM or in the charging control module CTM.

In step S6, a web page corresponding to the URL hosted by the application server AS is displayed on the communication device CD offering option to top up balance or to rent from other user an amount AM of units. The user can select a type Typ of units among money, data or time for example. Furthermore, the user can select a call number Num2 in order to rent units from the selected call number. For example, the user can select to rent 500 Megabytes from call number "9911 xxxxxx".

Once the selection is done by the user, a user information request ReqUI is sent to the application server AS from the charging trigger module CTM, the user information request ReqUI containing the call number Num1 of the user, the selected call number Num2 of another user, the selected amount Am of units, and the selected type Typ of units.

In step S7, the application server AS checks the received information and sends a message Mes to another communication device CD2 identified by the selected call number in order to enquire the received information and to confirm to grant of the required rent. The message Mes contains for example the following question: "Do you approve access of x units from your account to NUMBER1?", wherein NUMBER1 is the call number of the user. The message Mes can be a USSD message.

In step S8, once the application server AS has received a confirmation from the call number of said another user for the grant of the rent of the selected amount of units, the application server AS sends a user information response ResUI to the charging trigger module CTM. The confirmation can be received from said another user via a USSD message. The user information response ResUI contains the selected call number Num2 of another user, the selected amount Am of units, and the selected type Typ of units.

In step S9 and S10, the charging trigger module CTM requests the debit of the account associated with said selected call number by the selected amount of units.

In step S9 more precisely, the charging trigger module CTM sends an event request CCRe to the charging control module CCM to request debit of the selected amount of units from the account of the selected call number. The event request CCRe contains the identifier of the service, the number of requested service units (RSUs) corresponding to the selected amount of units, a Requested-Action as DIRECT_DEBITING and the selected call number Num2 of said another user as identifier of account to debit.

In step S10 more precisely, the charging control module CCM executes the requested debit of units from account of the selected call number. The charging control module CCM sends an event reply CCAe to the charging trigger module CTM to confirm the success of debit of the selected amount of units from the account of the selected call number. The event reply CCAe contains the identifier of the service, the number of granted service units (GSUs), and the selected call number Num2 of said another user as identifier of debited account.

In step S11 and S12, the charging trigger module CTM requests the credit of the account associated with the user by the selected amount of units.

In step S11 more precisely, the charging trigger module CTM sends an update request CCRu to the charging control module CCM.

The update request CCRu contains the amount Am of granted units, the call number Num1 of the user, and an AVP LEND which has the information about the amount Am and type Typ of units being provided to the user and about the call number Num2 of said another user. The update request indicates that a balance topup is to be done for the account of the user, as the account from said another user has been debited from said amount of units.

In step S12 more precisely, the charging control module CCM stores the call number of said another user and the amount and type of units lent from said another user. The charging control module CCM executes the requested credit of units for the account of the user. Then the charging control module CCM sends an update reply CCAu to the charging trigger module CTM, the update reply CCAu containing an information about success of crediting by the granted amount Am of units the account associated with the call number Num1 of the user.

In step S13, the charging trigger module CTM sends a credit request update message to the charging control module to resume the communication that was suspended in step S4. In a first example, the credit request update message is sent once the Redirection Validity-Time is expired. In a second example, the credit request update message is sent before the Redirection Validity-Time is expired, once a re-authentication request is received from the charging control module if this latter is configured to send this type of request; the re-authentication request may be a Re-Auth Request message.

The charging control module sends back an acknowledgement to this message to the charging trigger module since units were previously granted.

In step S14, when topup is observed in the account of the user, which means the balance was filled by the user, the charging control module CCM checks the information stored in relation with the received AVP LEND, and deducts the amount of units from the account of the user to credit back the account of said another user. The scope of the invention is defined by the appended claims.

## Claims

1. A method for dynamic third party charging applying to a service associated with a communication established by a communication device (CD) of a user within a telecommunications network (TN), the service being suspended due to insufficient balance in the account of the user, comprising the following steps performed in a network element capable of generating charging events while monitoring the communication's use of the network's resources:
retrieving (S5) an URL hosted by an application server, and sending the URL to the communication device that displays a web page corresponding to the URL and inviting user to select a call number, an amount of units, and a type of units,
sending (S6) a request (ReqUI) to the application server (AS), the request containing the selected call number, the selected amount of units, and the selected type of units in order to rent said amount of units from an account associated with said call number,
receiving (S8) a response (ResUI) from the application server (AS), if the rent is granted, the response containing the selected call number, the selected amount of units, the selected type of units, and an acknowledgment to proceed with the rent,
requesting (S9, S10) a server for the debit of the account associated with said selected call number by the selected amount of units,
requesting (S11, S12) the server for the credit of the account of the user by the selected amount of units.

2. A method according to claim 1, wherein the step of requesting (S9, S10) debit further comprises the following steps:
sending (S9) an event request (CCRe) to the server, the event request containing the selected call number, the selected amount of units, and the selected type of units in order to request debit of the selected amount of units from the account associated with said selected call number,
receiving (S10) an event response (CCAe) from the server, the event response containing the selected call number, the selected amount of units, and the selected type of units and an indication that the requested debit has been executed.

3. A method according to claim 1 or 2, wherein the step of requesting (S11, S12) credit further comprises the following steps:
sending (S11) an update request (CCRu) to the server, the update request containing the selected call number, the selected amount of units, and the selected type of units and an indication that a balance refill is to be done for the account of the user for the lent from the account associated with said selected call number,
receiving (S12) an update response (CCAu) from the server, the update response containing an information about success of crediting by the selected amount of units the account of the user.

4. A method according to any of the claim 1 to 3, wherein when balance in the account of the user is filled, said selected amount of units is deducted from the account of the user to credit back the account associated with said selected call number.

5. A network element for dynamic third party charging applying to a service associated with a communication established by a communication device (CD) of a user within a telecommunications network (TN), the service being suspended due to insufficient balance in the account of the user, the network element being capable of generating charging events while monitoring the communication's use of the network's resources and comprising:
means (CTM) for retrieving an URL hosted by an application server, and sending the URL to the communication device that displays a web page corresponding to the URL and inviting user to select a call number, an amount of units, and a type of units, means (CTM) for sending a request (ReqUI) to the application server (AS), the request containing the selected call number, the selected amount of units, and the selected type of units in order to rent said amount of units from an account associated with said call number, means (CTM) for receiving a response (ResUI) from the application server (AS), if the rent is granted, the response containing the selected call number, the selected amount of units, the selected type of units, and an acknowledgment to proceed with the rent, means (CTM) for requesting a server (CCM) for the debit of the account associated with said selected call number by the selected amount of units, means (CTM) for requesting the server (CCM) for the credit of the account of the user by the selected amount of units.

6. A method for dynamic third party charging applying to a service associated with a communication established by a communication device (CD) of a user within a telecommunications network (TN), the service being suspended due to insufficient balance in the account of the user, comprising the following steps performed in an application server:
receiving (S6) a request (ReqUI) from a network element capable of generating charging events while monitoring the communication's use of the network's resources, the request containing a call number, an amount of units, and a type of units in order to rent said amount of units from an account associated with said call number,
sending (S7) a message (Mes) to another communication device (CD2) identified by the selected call number in order to confirm the grant of the rent,
sending (S8) a response (ResUI) to the network element, if the rent is granted, the response containing the selected call number, the selected amount of units, the selected type of units, and an acknowledgment to proceed with the rent.

7. A method according to claim 6, whereby the message (Mes) is a USSD message.

8. An application server for dynamic third party charging applying to a service associated with a communication established by a communication device (CD) of a user within a telecommunications network (TN), the service being suspended due to insufficient balance in the account of the user, the application server comprising:
means for receiving a request (ReqUI) from a network element capable of generating charging events while monitoring the communication's use of the network's resources, the request containing a call number, an amount of units, and a type of units in order to rent said amount of units from an account associated with said call number,
means for sending a message (Mes) to another communication device (CD2) identified by the selected call number in order to confirm the grant of the rent,
means for sending a response (ResUI) to the network element, if the rent is granted, the response containing the selected call number, the selected amount of units, the selected type of units, and an acknowledgment to proceed with the rent.

9. A method for dynamic third party charging applying to a service associated with a communication established by a communication device (CD) of a user within a telecommunications network (TN), the service being suspended due to insufficient balance in the account of the user, the method comprising the following steps performed in a server:
receiving (S9) an event request (CCRe) from a network element capable of generating charging events while monitoring the communication's use of the network's resources, the event request containing a call number, an amount of units, and a type of units in order to request debit of the selected amount of units from the account associated with said selected call number,
executing (S10) a debit of said amount of units for the account of the selected call number,
receiving (S11) an update request (CCRu) from the network element, the update request containing said call number, said amount of units, and said type of units and an indication that a balance refill is to be done for the account of the user for the lent from the account associated with said selected call number,
executing a credit of said amount of units for the account of said user,
when balance in the account of the user is filled, deducting (S14) said selected amount of units from the account of the user to credit back the account associated with said selected call number.

10. A server for dynamic third party charging applying to a service associated with a communication established by a communication device (CD) of a user within a telecommunications network (TN), the service being suspended due to insufficient balance in the account of the user, the server comprising:
means (CCM) for receiving an event request (CCRe) from a network element capable of generating charging events while monitoring the communication's use of the network's resources, the event request containing a call number, an amount of units, and a type of units in order to request debit of the selected amount of units from the account associated with said selected call number, means (CCM) for executing a debit of said amount of units for the account of the selected call number, means (CCM) for receiving an update request (CCRu) from the network element, the update request containing said call number, said amount of units, and said type of units and an indication that a balance refill is to be done for the account of the user for the lent from the account associated with said selected call number means (CCM) for executing a credit of said amount of units for the account of said user, means (CCM) for deducting said selected amount of units from the account of the user to credit back the account associated with said selected call number, when balance in the account of the user is filled.

## Patentansprüche

1. Verfahren für eine dynamische drittseitige Gebührenerhebung, angewendet auf einen Dienst, der mit einer Kommunikation verbunden ist, die durch ein Kommunikationsgerät (CD) eines Nutzers innerhalb eines Kommunikationsnetzwerks (TN) aufgebaut wird, wobei der Dienst abgebrochen wird aufgrund eines unzureichenden Ausgleichs des Nutzerkontos, umfassend die folgenden Schritte, die in einem Netzwerkelement durchgeführt werden, das fähig ist, Gebührenerhebungsereignisse zu generieren, während der Kommunikationsgebrauch der Netzwerkressourcen überwacht wird:
Abrufen (S5) einer URL, die von einem Anwendungsserver gehostet wird, und Senden der URL an das Kommunikationsgerät, das eine Webseite anzeigt, die der URL entspricht, und Einladen des Nutzers, eine Rufnummer, einen Einheitenbetrag und einen Einheitentyp auszuwählen,
Senden (S6) einer Anforderung (ReqUI) an den Anwendungsserver (AS), wobei die Anforderung die ausgewählte Rufnummer enthält, den ausgewählten Einheitenbetrag und den ausgewählten Einheitentyp, um besagten Einheitenbetrag von einem Konto zu leihen, das mit besagter Rufnummer verbunden ist,
Empfangen (S8) einer Antwort (ResUI) von dem Anwendungsserver (AS), wenn das Leihen bewilligt wird, wobei die Antwort die ausgewählte Rufnummer, den ausgewählten Einheitenbetrag, den ausgewählten Einheitentyp und eine Bestätigung enthält, mit dem Leihen fortzufahren,
Auffordern (S9, S10) eines Servers zum Belasten des Kontos, das mit besagter ausgewählten Rufnummer verbunden ist, mit dem ausgewählten Einheitenbetrag,
Auffordern (S11, S12) des Servers zum Bereitstellen auf dem Nutzerkonto des ausgewählten Einheitenbetrags.

2. Verfahren nach Anspruch 1, wobei der Schritt des Anforderns (S9, S10) des Belastens weiterhin umfasst die folgenden Schritte:
Senden (S9) einer Ereignisanforderung (CCRe) an den Server, wobei die Ereignisanforderung die ausgewählte Rufnummer, den ausgewählten Einheitenbetrag und den ausgewählten Einheitentyp umfasst, um die Belastung mit dem ausgewählten Einheitenbetrag auf dem Konto anzufordern, das mit besagter ausgewählten Rufnummer verbunden ist,
Empfangen (S10) einer Ereignisantwort (CCAe) von dem Server, wobei die Ereignisantwort die ausgewählte Rufnummer, den ausgewählten Einheitenbetrag und den ausgewählten Einheitentyp und eine Anzeige umfasst, dass die angeforderte Belastung ausgeführt worden ist.

3. Verfahren nach Anspruch 1 oder 2, wobei der Schritt des Anforderns (S11, S12) von Guthaben weiterhin umfasst die folgenden Schritte:
Senden (S11) einer Aktualisierungsanforderung (CCRu) an den Server, wobei die Aktualisierungsanforderung umfasst die ausgewählte Rufnummer, den ausgewählten Einheitenbetrag und den ausgewählten Einheitentyp und eine Anzeige, dass ein Bilanzausgleich durchgeführt wird für das Nutzerkonto für das Leihen von dem Konto, das mit besagter ausgewählten Rufnummer verbunden ist,
Empfangen (S12) einer Aktualisierungsantwort (CCAu) von dem Server, wobei die Aktualisierungsantwort eine Information umfasst über den Erfolg des Anrechnens des ausgewählten Einheitenbetrags des Nutzerkontos.

4. Verfahren nach einem beliebigen der Ansprüche 1 bis 3, wobei, wenn die Bilanz des Nutzerkontos ausgeglichen wird, besagter ausgewählter Einheitenbetrag von dem Nutzerkonto abgezogen wird zum Ausgleichen des Kontos, das mit besagter ausgewählten Rufnummer verbunden ist.

5. Netzwerkelement für eine dynamische drittseitige Gebührenerhebung, angewendet auf einen Dienst, der mit einer Kommunikation verbunden ist, die von einem Kommunikationsgerät (CD) eines Nutzers aufgebaut wird innerhalb eines Telekommunikationsnetzwerks (TN), wobei der Dienst abgebrochen wird aufgrund eines unzureichenden Ausgleichs des Nutzerkontos, wobei das Netzwerkelement fähig ist, Gebührenerhebungsereignisse zu erzeugen, während der Kommunikationsgebrauch der Netzwerkressourcen überwacht wird, und umfassend:
Mittel (CTM) zum Abrufen einer URL, die von einem Anwendungsserver gehostet wird, und Senden der URL an das Kommunikationsgerät, das eine Webseite anzeigt, die der URL entspricht, und Einladen des Nutzers zum Auswählen einer Rufnummer, eines Einheitenbetrags und eines Einheitentyps, Mittel (CTM) zum Senden einer Anforderung (ReqUI) an den Anwendungsserver (AS), wobei die Anforderung, welche die ausgewählte Rufnummer, den ausgewählten Einheitenbetrag und den ausgewählten Einheitentyp umfasst, um besagten Einheitenbetrag von einem Konto zu leihen, das mit besagter Rufnummer verbunden ist, Mittel (CTM) zum Empfangen einer Antwort (ResUI) von dem Anwendungsserver (AS), wenn das Leihen bewilligt wird, wobei die Antwort die ausgewählte Rufnummer, den ausgewählten Einheitenbetrag, den ausgewählten Einheitentyp und eine Bestätigung umfasst, mit dem Leihen fortzufahren,
Mittel (CTM) zum Auffordern eines Servers (CCM) zum Belasten des Kontos, das mit besagter ausgewählten Rufnummer verbunden ist, mit dem ausgewählten Einheitenbetrag,
Mittel (CTM) zum Auffordern des Servers (CCM) zum Bereitstellen auf dem Nutzerkonto des ausgewählten Einheitenbetrags.

6. Verfahren für eine dynamische drittseitige Gebührenerhebung, angewendet auf einen Dienst, der mit einer Kommunikation verbunden ist, die durch ein Kommunikationsgerät (CD) eines Nutzers innerhalb eines Kommunikationsnetzwerks (TN) aufgebaut wird, wobei der Dienst abgebrochen wird aufgrund eines unzureichenden Ausgleichs des Nutzerkontos, umfassend die folgenden Schritte, die in einem Anwendungsserver durchgeführt werden:
Empfangen (S6) einer Anforderung (ReqUI) von einem Netzwerkelement, das fähig ist, Gebührenerhebungsereignisse zu generieren, während der Kommunikationsgebrauch der Netzwerkressourcen überwacht wird, wobei die Anforderung umfasst eine Rufnummer, einen Einheitenbetrag und einen Einheitentyp, um besagten Einheitenbetrag von einem Konto zu leihen, das mit besagter Rufnummer verbunden ist,
Senden (S7) einer Nachricht (Mes) an ein anderes Kommunikationsgerät (CD2), das durch die ausgewählte Rufnummer identifiziert wird, um das Erteilen des Leihens zu bestätigen,
Senden (S8) einer Antwort (ResUI) an das Netzwerkelement, wenn das Leihen erteilt ist, wobei die Antwort die ausgewählte Rufnummer, den ausgewählten Einheitenbetrag, den ausgewählten Einheitentyp und eine Bestätigung enthält, mit dem Leihen fortzufahren.

7. Verfahren nach Anspruch 6, wobei die Nachricht (Mes) eine USSD-Nachricht ist.

8. Anwendungsserver für eine dynamische drittseitige Gebührenerhebung, angewendet auf einen Dienst, der mit einer Kommunikation verbunden ist, die durch ein Kommunikationsgerät (CD) eines Nutzers innerhalb eines Kommunikationsnetzwerks (TN) aufgebaut wird, wobei der Dienst abgebrochen wird aufgrund eines unzureichenden Ausgleichs des Nutzerkontos, wobei der Anwendungsserver umfasst:
Mittel zum Empfangen einer Anforderung (ReqUI) von einem Netzwerkelement, das fähig ist, Gebührenerhebungsereignisse zu erzeugen, während der Kommunikationsgebrauch der Netzwerkressourcen überwacht wird, wobei die Anforderung umfasst eine Rufnummer, einen Einheitenbetrag und einen Einheitentyp, um besagten Einheitenbetrag von einem Konto zu leihen, der verbunden ist mit besagter Rufnummer,
Mittel zum Senden einer Nachricht (Mes) an ein anderes Kommunikationsgerät (CD2), das durch die ausgewählte Rufnummer identifiziert wird, um das Erteilen des Leihens zu bestätigen,
Mittel zum Senden einer Antwort (ResUI) an das Netzwerkelement, wenn das Leihen bewilligt ist, wobei die Antwort die ausgewählte Rufnummer, den ausgewählten Einheitenbetrag, den ausgewählten Einheitentyp und eine Bestätigung enthält, mit dem Leihen fortzufahren.

9. Verfahren für eine drittseitige Gebührenerhebung, angewendet auf einen Dienst, der mit einer Kommunikation verbunden ist, die durch ein Kommunikationsgerät (CD) eines Nutzers innerhalb eines Kommunikationsnetzwerks (TN) aufgebaut wird, wobei der Dienst abgebrochen wird aufgrund eines unzureichenden Ausgleichs des Nutzerkontos, umfassend die folgenden Schritte, die in einem Server durchgeführt werden:
Empfangen (S9) einer Ereignisanforderung (CCRe) von einem Netzwerkelement, das fähig ist, Gebührenerhebungsereignisse zu erzeugen, während der Kommunikationsgebrauch der Netzwerkressourcen überwacht wird, wobei die Ereignisanforderung umfasst eine Rufnummer, einen Einheitenbetrag und einen Einheitentyp, um eine Belastung des ausgewählten Einheitenbetrags von dem Konto anzufordern, das mit besagter ausgewählten Rufnummer verbunden ist,
Ausführen (S10) einer Belastung besagten Einheitenbetrags für das Konto der ausgewählten Rufnummer,
Empfangen (S11) einer Aktualisierungsanforderung (CCRu) von dem Netzwerkelement, wobei die Aktualisierungsanforderung umfasst besagte Rufnummer, besagten Einheitenbetrag und besagten Einheitentyp und eine Anzeige, dass ein Bilanzausgleich durchgeführt wird für das Nutzerkonto für das Leihen von dem Konto, das mit besagter ausgewählten Rufnummer verbunden ist,
Ausführen eines Anrechnens besagten Einheitenbetrags für das Konto besagten Nutzers, wenn die Bilanz des Nutzerkontos ausgeglichen wird, Abziehen (S14) besagten ausgewählten Einheitenbetrags von dem Nutzerkonto zum Ausgleichen des Kontos, das mit besagter ausgewählten Rufnummer verbunden ist.

10. Server für eine dynamische drittseitige Gebührenerhebung, angewendet auf einen Dienst, der mit einer Kommunikation verbunden ist, die durch ein Kommunikationsgerät (CD) eines Nutzers innerhalb eines Kommunikationsnetzwerks (TN) aufgebaut wird, wobei der Dienst abgebrochen wird aufgrund eines unzureichenden Ausgleichs des Nutzerkontos, wobei der Server umfasst:
Mittel (CCM) zum Empfangen einer Ereignisanforderung (CCRe) von einem Netzwerkelement, das fähig ist, Gebührenerhebungsereignisse zu generieren, während der Kommunikationsgebrauch der Netzwerkressourcen überwacht wird, wobei die Ereignisanforderung umfasst eine Rufnummer, einen Einheitenbetrag und einen Einheitentyp, um eine Belastung des ausgewählten Einheitenbetrags von dem Konto anzufordern, das mit besagter ausgewählten Rufnummer verbunden ist,
Mittel (CCM) zum Ausführen einer Belastung des Kontos der ausgewählten Rufnummer mit besagtem Einheitenbetrag,
Mittel (CCM) zum Empfangen einer Aktualisierungsanforderung (CCRu) von dem Netzwerkelement, wobei die Aktualisierungsanforderung umfasst besagte Rufnummer, besagten Einheitenbetrag und besagten Einheitentyp und eine Anzeige, dass ein Bilanzausgleich durchgeführt wird für das Nutzerkonto für das Leihen von dem Konto, das mit besagter ausgewählten Rufnummer verbunden ist,
Mittel (CCM) zum Ausführen eines Ausgleichs von besagtem Einheitenbetrag auf dem Konto besagten Nutzers,
Mittel (CCM) zum Abziehen besagten ausgewählten Einheitenbetrags von dem Nutzerkonto zum Ausgleichen des Kontos, das verbunden ist mit besagter ausgewählten Rufnummer, wenn das Nutzerkonto ausgeglichen wird.

## Revendications

1. Procédé de facturation dynamique de tiers s'appliquant à un service associé à une communication établie par un dispositif de communication (CD) d'un utilisateur au sein d'un réseau de télécommunications (TN), le service étant suspendu en raison d'un solde insuffisant du compte de l'utilisateur, comprenant les étapes suivantes exécutées dans un élément de réseau capable de générer des événements de facturation tout en surveillant l'utilisation par la communication des ressources du réseau :
récupérer (S5) une adresse URL stockée sur un serveur d'application, et envoyer l'adresse URL au dispositif de communication qui affiche une page Web correspondant à l'adresse URL et inviter l'utilisateur à sélectionner un numéro d'appel, un nombre d'unités et un type d'unité,
envoyer (S6) une requête (ReqUI) au serveur d'application (AS), la requête contenant le numéro d'appel sélectionné, le nombre d'unités sélectionné et le type d'unité sélectionné afin de réserver ledit nombre d'unités sur un compte associé audit numéro d'appel,
recevoir (S8) une réponse (ResUI) du serveur d'application (AS), si la réservation est accordée, la réponse contenant le numéro d'appel sélectionné, le nombre d'unités sélectionné, le type d'unité sélectionné et un accusé de réception pour poursuivre la réservation,
demander (S9, S10) à un serveur de débiter le compte associé audit numéro d'appel du nombre d'unités sélectionné,
demander (S11, S12) au serveur de créditer le compte de l'utilisateur du nombre d'unités sélectionné.

2. Procédé selon la revendication 1, dans lequel l'étape de demande (S9, S10) de débit comprend en outre les étapes suivantes :
envoyer (S9) une requête d'événement (CCRe) au serveur, la requête d'événement contenant le numéro d'appel sélectionné, le nombre d'unités sélectionné et le type d'unité sélectionné afin de demander de débiter du nombre d'unités sélectionné le compte associé audit numéro d'appel sélectionné,
recevoir (S10) une réponse à événement (CCAe) du serveur, la réponse à événement contenant le numéro d'appel sélectionné, le nombre d'unités sélectionné et le type d'unité sélectionné, ainsi qu'une indication selon laquelle le débit demandé a été exécuté.

3. Procédé selon la revendication 1 ou 2, dans lequel l'étape de demande (S11, S12) de crédit comprend en outre les étapes suivantes :
envoyer (S11) une requête de mise à jour (CCRu) au serveur, la requête de mise à jour contenant le numéro d'appel sélectionné, le nombre d'unités sélectionné et le type d'unité sélectionné, ainsi qu'une indication selon laquelle une recharge de solde doit être effectuée sur le compte de l'utilisateur pour la réservation sur le compte associé audit numéro d'appel sélectionné,
recevoir (S12) une réponse de mise à jour (CCAu) du serveur, la réponse de mise à jour contenant une information sur la réussite de l'octroi d'un crédit du nombre d'unités sélectionné sur le compte de l'utilisateur.

4. Procédé selon l'une quelconque des revendications 1 à 3, dans lequel lorsque le solde du compte de l'utilisateur est rechargé, ledit nombre d'unités sélectionné est déduit du compte de l'utilisateur pour créditer en retour le compte associé audit numéro d'appel sélectionné.

5. Élément de réseau destiné à la facturation dynamique de tiers s'appliquant à un service associé à une communication établie par un dispositif de communication (CD) d'un utilisateur au sein d'un réseau de télécommunications (TN), le service étant suspendu en raison d'un solde insuffisant du compte de l'utilisateur, l'élément de réseau étant capable de générer des événements de facturation tout en surveillant l'utilisation par la communication des ressources du réseau et comprenant :
des moyens (CTM) pour récupérer une adresse URL stockée sur un serveur d'application, et envoyer l'adresse URL au dispositif de communication qui affiche une page Web correspondant à l'adresse URL et inviter l'utilisateur à sélectionner un numéro d'appel, un nombre d'unités et un type d'unité,
des moyens (CTM) pour envoyer une requête (ReqUI) au serveur d'application (AS), la requête contenant le numéro d'appel sélectionné, le nombre d'unités sélectionné et le type d'unité sélectionné afin de réserver ledit nombre d'unités sur un compte associé audit numéro d'appel,
des moyens (CTM) pour recevoir une réponse (ResUI) du serveur d'application (AS), si la réservation est accordée, la réponse contenant le numéro d'appel sélectionné, le nombre d'unités sélectionné, le type d'unité sélectionné et un accusé de réception pour poursuivre la réservation,
des moyens (CTM) pour demander à un serveur (CCM) de débiter le compte associé audit numéro d'appel sélectionné du nombre d'unités sélectionné,
des moyens (CTM) pour demander au serveur (CCM) de créditer le compte de l'utilisateur du nombre d'unités sélectionné.

6. Procédé de facturation dynamique de tiers s'appliquant à un service associé à une communication établie par un dispositif de communication (CD) d'un utilisateur au sein d'un réseau de télécommunications (TN), le service étant suspendu en raison d'un solde insuffisant du compte de l'utilisateur, comprenant les étapes suivantes exécutées dans un serveur d'application :
recevoir (S6) une requête (ReqUI) d'un élément de réseau capable de générer des événements de facturation tout en surveillant l'utilisation par la communication des ressources du réseau, la requête contenant un numéro d'appel, un nombre d'unités et un type d'unité afin de réserver ledit nombre d'unités sur un compte associé audit numéro d'appel,
envoyer (S7) un message (Mes) à un autre dispositif de communication (CD2) identifié par le numéro d'appel sélectionné afin de confirmer l'octroi de la réservation,
envoyer (S8) une réponse (ResUI) à l'élément de réseau, si la réservation est accordée, la réponse contenant le numéro d'appel sélectionné, le nombre d'unités sélectionné, le type d'unité sélectionné et un accusé de réception pour poursuivre la réservation.

7. Procédé selon la revendication 6, dans lequel le message (Mes) est un message USSD.

8. Serveur d'application destiné à la facturation dynamique de tiers s'appliquant à un service associé à une communication établie par un dispositif de communication (CD) d'un utilisateur au sein d'un réseau de télécommunications (TN), le service étant suspendu en raison d'un solde insuffisant du compte de l'utilisateur, le serveur d'application comprenant :
des moyens pour recevoir une requête (ReqUI) d'un élément de réseau capable de générer des événements de facturation tout en surveillant l'utilisation par la communication des ressources du réseau, la requête contenant un numéro d'appel, un nombre d'unités et un type d'unité afin de se réserver ledit nombre d'unités sur un compte associé audit numéro d'appel,
des moyens pour envoyer un message (Mes) à un autre dispositif de communication (CD2) identifié par le numéro d'appel sélectionné afin de confirmer l'octroi de la réservation,
des moyens pour envoyer une réponse (ResUI) à l'élément de réseau, si la réservation est accordée, la réponse contenant le numéro d'appel sélectionné, le nombre d'unités sélectionné, le type d'unité sélectionné et un accusé de réception pour poursuivre la réservation.

9. Procédé de facturation dynamique de tiers s'appliquant à un service associé à une communication établie par un dispositif de communication (CD) d'un utilisateur au sein d'un réseau de télécommunications (TN), le service étant suspendu en raison d'un solde insuffisant du compte de l'utilisateur, le procédé comprenant les étapes suivantes exécutées dans un serveur :
recevoir (S9) une requête d'événement (CCRe) d'un élément de réseau capable de générer des événements de facturation tout en surveillant l'utilisation par la communication des ressources du réseau, la requête d'événement contenant un numéro d'appel, un nombre d'unités et un type d'unité afin de demander de débiter du nombre d'unités sélectionné le compte associé audit numéro d'appel sélectionné,
débiter (S10) dudit nombre d'unités le compte du numéro d'appel sélectionné,
recevoir (S11) une requête de mise à jour (CCRu) de l'élément de réseau, la requête de mise à jour contenant ledit numéro d'appel, ledit nombre d'unités et ledit type d'unité, ainsi qu'une indication selon laquelle une recharge du solde doit être effectuée sur le compte de l'utilisateur pour la réservation sur le compte associé audit numéro d'appel sélectionné,
créditer dudit nombre d'unités le compte dudit utilisateur, lorsque le solde du compte de l'utilisateur est rechargé, en déduisant (S14) ledit nombre d'unités sélectionné du compte de l'utilisateur pour créditer en retour le compte associé audit numéro d'appel sélectionné.

10. Serveur destiné à la facturation dynamique de tiers s'appliquant à un service associé à une communication établie par un dispositif de communication (CD) d'un utilisateur au sein d'un réseau de télécommunications (TN), le service étant suspendu en raison d'un solde insuffisant du compte de l'utilisateur, le serveur comprenant :
des moyens (CCM) pour recevoir une requête d'événement (CCRe) d'un élément de réseau capable de générer des événements de facturation tout en surveillant l'utilisation par la communication des ressources du réseau, la requête d'événement contenant un numéro d'appel, un nombre d'unités et un type d'unité afin de demander de débiter du nombre d'unités sélectionné le compte associé audit numéro d'appel sélectionné,
des moyens (CCM) pour débiter dudit nombre d'unités le compte du numéro d'appel sélectionné,
des moyens (CCM) pour recevoir une requête de mise à jour (CCRu) de l'élément de réseau, la requête de mise à jour contenant ledit numéro d'appel, ledit nombre d'unités et ledit type d'unité, ainsi qu'une indication selon laquelle une recharge du solde doit être effectuée sur le compte de l'utilisateur pour la réservation sur le compte associé audit numéro d'appel sélectionné,
des moyens (CCM) pour créditer dudit nombre d'unités le compte dudit utilisateur,
des moyens (CCM) pour déduire ledit nombre d'unités sélectionné du compte de l'utilisateur pour créditer en retour le compte associé audit numéro d'appel sélectionné, lorsque le solde du compte de l'utilisateur est rechargé.
